# FASCICULE DE BREVET EUROPEEN

(11) **EP 2 954 976 B1**
(45) Date de publication et mention de la délivrance du brevet: **26.04.2017**
(21) Numéro de dépôt: 15170436.8
(22) Date de dépôt: 03.06.2015
(51) Int. Cl.: B23Q 3/08, B25B 11/00

(54) **DISPOSITIF DE BRIDAGE D'UNE PIÈCE À TRAVAILLER SUR UNE TABLE DE TRAVAIL**
FESTSPANNVORRICHTUNG FÜR EIN ZU BEARBEITENDES WERKSTÜCK AUF EINEM ARBEITSTISCH
DEVICE FOR FLANGING A WORKPIECE ON A WORK TABLE

(30) Priorité: 10.06.2014 FR 1455255
(43) Date de publication de la demande: 16.12.2015
(73) Titulaire: Thibaut, 14500 Vire (FR)
(72) Inventeur: THIBAUT, Jacques, 14500 Vaudry (FR); THIBAUT, Christophe, 14500 Vire (FR)
(74) Mandataire: Kaspar, Jean-Georges

(56) Documents cités:
- EP-A1- 2 682 226
- DE-A1- 10 119 029
- FR-A1- 2 969 024

## Description

L'invention est relative à un dispositif de bridage d'une pièce à travailler sur une table de travail, du type comportant une première face de solidarisation par dépression à une table de travail et une deuxième face de solidarisation par dépression d'une pièce à travailler.

Le document WO 2012/085 446, sur lequel est basé le préambule de la revendication 1, décrit un dispositif formant plot de bridage comportant un corps présentant une première face de solidarisation par dépression à une table de travail et une deuxième face de solidarisation par dépression d'une pièce à travailler. Le corps contient une pompe à vide et une batterie électrique rechargeable pour alimenter en énergie ladite pompe à vide. Une réserve tampon de vide reliée à la pompe à vide assure la régularité de la pompe à vide et évite des mises en marche et des arrêts répétés de manière rapprochée. Un rideau fluide disposé en périphérie de la deuxième face supérieure formant ventouse de solidarisation par dépression peut être prévu pour constituer un joint capillaire concentrique et éviter le décollement de la deuxième face supérieure formant ventouse de solidarisation par dépression, en empêchant en outre la pénétration de poussières, boues, copeaux indésirables ou autres particules. Des filtres sont prévus sur le circuit du rideau fluide et sur le circuit de dépression de la pompe à vide.

Le dispositif du document WO 2012/085 446 donne satisfaction lorsque les pièces à travailler sont des pièces présentant une surface relativement lisse, permettant une bonne adhésion de la deuxième face de solidarisation par dépression. Cependant, l'application de ce dispositif au bridage de pièces à travailler constituées de matériaux rocheux, abrasifs ou générateurs de poussières, impuretés ou copeaux présente plusieurs inconvénients.

D'une part, la présence de poussières, impuretés ou copeaux empêche une bonne étanchéité des faces de solidarisation et produit des fuites de vide nécessitant une mise en marche répétée de la pompe à vide.

D'autre part, le colmatage ou la contamination des filtres de protection nécessite des nettoyages fréquents et produit d'importantes pertes de charge dans les écoulements d'air ou de fluide à l'intérieur du plot de bridage.

Ces inconvénients peuvent également conduire à une durée de vie limitée de la pompe à vide et de la pompe d'alimentation du rideau fluide.

Enfin, le placage de la pièce à travailler sur la ventouse supérieure de solidarisation est parfois imparfait, ce qui constitue également des sources de fuite et nuit à la bonne qualité du bridage.

Un but de l'invention est de remédier aux inconvénients de la technique connue, en proposant un nouveau dispositif dans lequel les pertes de charge sont diminuées.

Un autre but de l'invention est de proposer un nouveau dispositif dans lequel le placage de la pièce à travailler sur la ventouse supérieure de solidarisation s'effectue instantanément par aspiration, et conduit ainsi à une bonne efficacité du bridage de la pièce à travailler.

L'invention a pour objet un dispositif de bridage d'une pièce à travailler sur une table de travail, du type comportant une première face de solidarisation par dépression à une table de travail et une deuxième face de solidarisation par dépression d'une pièce à travailler, dans lequel un corps contient un moyen générateur de dépression relié à ladite première face de solidarisation par dépression à la table de travail, caractérisé par le fait que le corps présente une cavité inférieure ouverte vers le bas et disposée au voisinage de ladite première face de solidarisation par dépression à la table de travail, par le fait que ladite cavité forme une réserve de vide et par le fait que ladite réserve de vide est reliée par un conduit sensiblement rectiligne à ladite deuxième face de solidarisation par dépression de la pièce à travailler, de manière à constituer un choc de dépression lors de l'ouverture dudit conduit et une aspiration du côté de ladite deuxième face de solidarisation, afin que le placage de la pièce à travailler s'effectue instantanément en aspirant et en piégeant l'eau et les impuretés éventuelles dans ladite réserve de vide.

Selon d'autres caractéristiques alternatives de l'invention :
- La cavité formant une réserve de vide est avantageusement définie par un volume creux ménagé à la base du corps et par un joint d'étanchéité périphérique au contact de la table de travail.
- Le conduit reliant la réserve de vide à la deuxième face de solidarisation de la pièce à travailler comporte de préférence un clapet de passage à commande pneumatique.
- Le corps peut présenter une face supérieure de montage étanche d'une tête de bridage par dépression de la pièce à travailler.
- Une tête de bridage de pièce à travailler peut comporter un moyen de montage anti rotation sur la face supérieure de montage du corps.
- Une tête de bridage de pièce à travailler peut comporter une bague à visser radialement extérieure destinée à coopérer avec un écrou fixe formé sur la face supérieure de montage du corps.
- La tête de bridage peut être de toutes formes : ronde, carrée, rectangulaire, ou autre forme adaptée au montage par dépression d'une pièce à travailler.
- Le corps peut être apte à recevoir une butée comportant une bague à visser destinée à coopérer avec un taraudage du corps.

L'invention sera mieux comprise grâce à la description qui va suivre donnée à titre d'exemple non limitatif, en référence aux dessins annexés dans lesquels :
La figure 1 représente schématiquement une vue en coupe diamétrale d'un premier mode de réalisation de dispositif de bridage selon l'invention.
La figure 2 représente schématiquement une vue en perspective illustrant divers types de montage correspondant à des dispositifs de bridage selon l'invention.

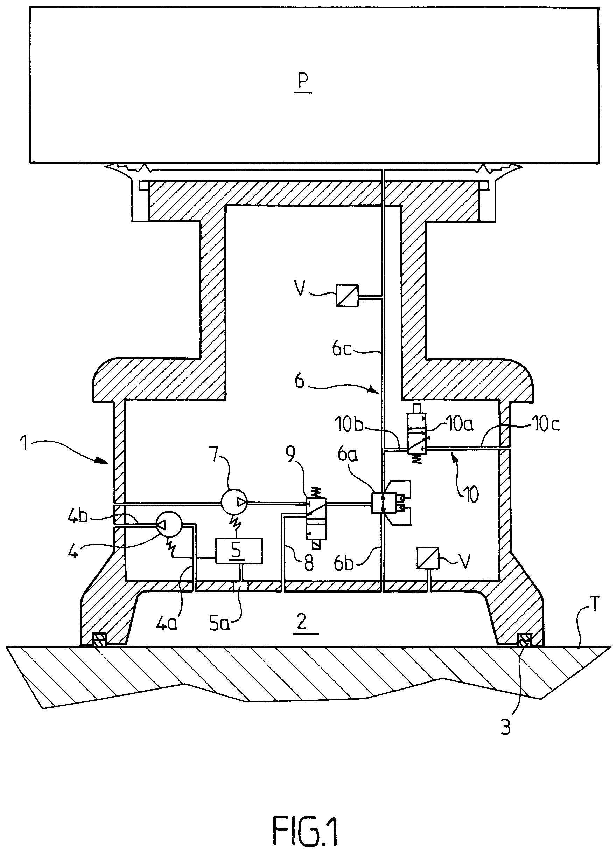

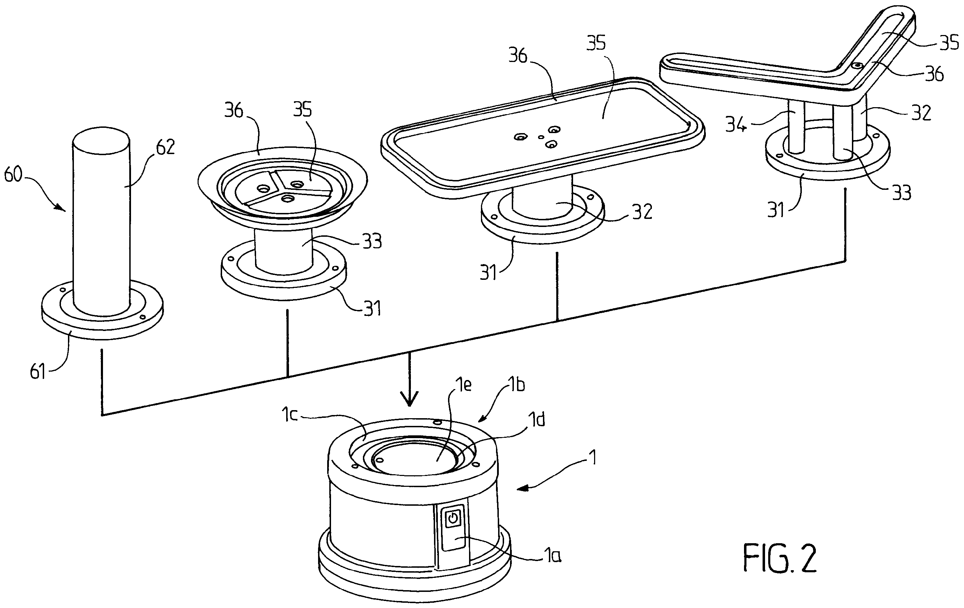

En référence aux figures 1 et 2, les éléments identiques ou fonctionnellement équivalents sont repérés par des chiffres de référence identiques.

Sur la figure 1, un premier mode de réalisation d'un dispositif de bridage selon l'invention comporte un corps 1 de forme sensiblement cylindrique contenant un moyen générateur de dépression pour positionner le corps sur une table de travail T et le solidariser par dépression à la table de travail T.

Une cavité 2 est ménagée en partie inférieure du corps 1 pour constituer une réserve de vide. La cavité 2 est limitée par un joint d'étanchéité périphérique 3 et définit un volume creux ménagé à la base du corps, ce volume constituant la réserve de vide.

Une pompe à vide 4 est alimentée par une source d'énergie 5, comportant généralement plusieurs batteries électriques rechargeables.

La pompe à vide 4 communique directement, sans filtres intermédiaires, avec la cavité 2 par un conduit 4a d'aspiration pour constituer une réserve de vide.

La pompe à vide 4 refoule l'air aspiré dans la cavité 2 par un conduit 4b relié à l'atmosphère.

La pompe à vide 4 comporte un clapet intérieur, de manière connue en soi, pour éviter tout remplissage de la cavité 2 par l'air extérieur en cas d'arrêt de fonctionnement.

La pompe à vide 4 est disposée au voisinage de la cavité 2, de sorte que les conduits 4a et 4b sont relativement courts, de manière à réduire les pertes de charge et à augmenter l'efficacité de la pompe à vide 4.

Aucun filtre n'est prévu sur les conduits 4a, 4b, de manière à éviter tout colmatage et toute perte d'efficacité de la mise en dépression.

Pour éviter l'aspiration de particules indésirables, le conduit 4a d'aspiration débouche dans la cavité 2 en partie supérieure, de sorte que les particules indésirables restent au voisinage de la surface de la table de travail T.

Un conduit 6 vertical et à passage intégral est prévu pour mettre instantanément sous dépression la deuxième face de solidarisation par dépression d'une pièce à travailler P, afin que le placage de cette pièce P à travailler s'effectue instantanément.

Le choc de dépression lors de l'ouverture du conduit 6 produit une aspiration de l'eau et des impuretés éventuellement présentes du côté de la face supérieure de solidarisation, afin que le placage de la pièce à travailler s'effectue instantanément en les aspirant et en les piégeant dans la réserve 2 de vide.

Le conduit 6 de mise sous dépression de la face supérieure de solidarisation est un conduit à passage intégral à l'exception d'un clapet 6a à commande pneumatique comportant un volet souple.

Selon une variante avantageuse, le clapet 6a à commande pneumatique est démontable et placé directement du côté de la cavité 2, de manière à nettoyer facilement son volet souple.

Le clapet 6a à commande pneumatique peut délimiter une portion inférieure de conduit 6b et une portion supérieure de conduit 6c, comme représenté à la figure 1.

Contrairement au dispositif du document WO 2012/085 446, la pompe à vide 4 agit uniquement ici sur la face inférieure de solidarisation à la table de travail T en constituant une réserve de vide suffisante dans la cavité 2 pour constituer un choc de dépression lors de l'ouverture du clapet 6a.

Ce choc de dépression aspire brusquement la pièce P à travailler et écrase la ventouse de solidarisation.

La pompe à vide 4 maintient la dépression en reconstituant la réserve de vide dans la cavité 2, puis s'arrête lorsque le niveau de vide désiré est atteint.

Contrairement au dispositif du document WO 2012/085 446, il n'existe aucun besoin de constituer un joint capillaire concentrique au niveau de la deuxième face supérieure de solidarisation.

Le placage de la ventouse supérieure contre la pièce P à travailler s'effectue ainsi instantanément, et évite tout déplacement indésirable de la pièce P pouvant résulter d'un glissement latéral dû à une mauvaise mise sous dépression.

Une pompe 7 de commande pneumatique est prévue pour la commande du clapet pneumatique 6a.

Le clapet pneumatique 6a peut être commandé par une pression positive générée par la pompe 7 ou par une dépression provenant d'un conduit 8 mis en relation avec la réserve de vide de la cavité 2.

Le distributeur 9 de commande permet de commander la position du clapet 6a par mise en relation avec une pression positive générée par la pompe 7 ou une dépression provenant du conduit 8.

Enfin, une mise à l'atmosphère de la face supérieure de solidarisation est prévue par l'intermédiaire d'un conduit 10 comportant un distributeur 10a définissant ainsi deux portions 10b et 10c du conduit 10 de mise à l'atmosphère.

De manière connue, un vacuostat inférieur V surveille la dépression de la cavité 2 et un vacuostat supérieur V surveille la dépression de bridage de la pièce à travailler P.

Un circuit électronique programmable de commande non représenté assure le fonctionnement du dispositif selon l'invention et la commande des pompe à vide 4, pompe positive 7, ainsi que des distributeurs 9 et 10a, tout en surveillant le niveau de charge électrique des batteries 5.

Lorsque le niveau de charge des batteries 5 est insuffisant ou que la réserve disponible ne permet pas d'effectuer plusieurs cycles, le dispositif selon l'invention est évacué par la machine à travailler les pièces P pour être placé par sa fiche 5a sur un moyen de recharge électrique non représenté.

La machine à travailler les pièces P comporte de préférence un magasin pouvant stocker une pluralité de dispositifs selon l'invention.

Grâce à l'invention, le positionnement des dispositifs de bridage peut d'abord être effectué sur la table de travail, de sorte que les cavités 2 des dispositifs déjà positionnés peuvent être mis sous vide pour constituer rapidement une réserve de vide et permettre ensuite d'effectuer un bridage quasi instantané d'une pièce à travailler sur une pluralité de dispositifs.

Le fait de surveiller la dépression dans la cavité 2 et de surveiller le niveau d'énergie disponible permet de gérer le nombre de dispositifs à recharger électriquement, de manière à accroître la productivité de la machine travaillant les pièces P.

L'absence de filtre et d'obstruction des conduits de mise sous dépression assure un fonctionnement efficace et évite les arrêts nécessaires pour décolmater et nettoyer les conduits et les filtres de l'art antérieur.

Le fait de prévoir une cavité 2 ouverte vers le bas permet d'effectuer un nettoyage périodique de cette partie et d'éviter l'accumulation de poussières ou d'impuretés indésirables.

Les vacuostats V sont des détecteurs de dépression pour détecter la dépression générée sur la première face inférieure de solidarisation par dépression à la table de travail et sur la deuxième face de solidarisation par dépression de la pièce à travailler.

Les vacuostats V délivrent des signaux électriques ou mécaniques indiquant le niveau d'un vide représentatif d'une valeur de force de maintien sur la première face inférieure de solidarisation par dépression à la table de travail et sur la deuxième face de solidarisation par dépression de la pièce à travailler.

Les niveaux de dépression transmis par les vacuostats V à la machine de travail sont transmis par transmission sans fil, de préférence par transmission hertzienne. Le niveau d'énergie disponible est également transmis par la transmission sans fil, de préférence par transmission hertzienne.

La conduction par passage intégral à travers les conduits 4a, 4b, 6b, 6c et par le clapet 6a permet de réduire notablement les temps de mise en dépression et de bridage par rapport à l'art antérieur décrit dans le document WO 2012/085 446.

L'absence de filtres ou d'autres organes de passage susceptibles d'être colmatés ou de subir des pertes de charge accroît également la productivité. Cependant l'ouverture du conduit 6 produit une aspiration du côté de ladite deuxième face de solidarisation, et le placage de la pièce à travailler s'effectue instantanément tout en aspirant et en piégeant l'eau et les impuretés éventuelles dans la réserve 2 de vide.

Cette eau et ces impuretés éventuelles piégées dans la réserve 2 de vide se déposent sur la table T de travail et peuvent être éliminées ultérieurement, après enlèvement du corps 1, par simple essuyage de la table T de travail.

La cavité 2 présente un volume creux défini par le contour du joint d'étanchéité 3 et la table de travail très supérieur au volume compris entre la ventouse supérieure et la pièce à travailler P.

Enfin, le fait de prévoir une cavité 2 ouverte vers le bas permet de laisser ces impuretés et poussières éventuelles se déposer directement sur la table de travail T, de sorte que le dispositif selon l'invention n'est pas pollué par ces poussières ou impuretés indésirables.

L'amélioration des conductances des conduits 4a, 4b, 6b, 6c permet également d'utiliser une pompe à vide de caractéristiques réduites par rapport à l'art antérieur, et consommant moins d'énergie que la pompe à vide de l'art antérieur.

Un moyen externe constituant un interrupteur manuel d'arrêt et de mise en marche du dispositif selon l'invention est prévu, de manière connue en soi, et ne nécessite pas de description plus détaillée. Ce moyen peut comporter un interrupteur d'arrêt et de mise en marche de l'alimentation en énergie.

Alternativement, le dispositif selon l'invention peut être commandé à distance par la machine de travail, par exemple par liaison sans fil ou par un autre moyen.

Le fonctionnement du dispositif de la figure 1 peut être mis en oeuvre manuellement, ou de manière automatique par une machine de travail équipée d'une broche adaptée à cet effet, et va être décrit ci-après.

Sur la figure 1, après avoir effectué le positionnement des plots de bridage, on active la pompe à vide 4 alimentée par sa source d'énergie 5 de manière à créer une dépression dans la cavité 2, limitée par le joint d'étanchéité 3 au contact de la table de travail T.

Après avoir ainsi bridé la partie inférieure du corps 1 au contact de la table de travail T, on met en place la pièce à travailler P sur la ventouse supérieure définissant la deuxième face de solidarisation et on commande l'ouverture du clapet 6a pour mettre le volume compris entre la ventouse supérieure et la pièce P en relation avec la réserve de vide constituée dans la cavité 2.

Cette mise en relation provoque un choc de dépression et un écrasement de la ventouse supérieure sur laquelle la pièce à travailler P vient se plaquer.

On effectue ensuite les opérations inverses pour libérer la pièce P finie et détacher les plots de bridage.

Sur la figure 2, un mode de réalisation préféré de dispositif selon l'invention comporte un corps 1 et une tête de bridage choisie en fonction de la position et du travail à effectuer.

Le corps 1 est une partie de dispositif destinée à être fixée à une table T de travail pour constituer un dispositif de bridage selon l'invention, ou éventuellement pour constituer une butée latérale pour une pièce de travail.

Le corps 1 présente un interrupteur externe 1a de mise en marche de la source d'énergie électrique contenue dans le corps et une conformation supérieure de montage 1b.

La conformation supérieure de montage 1b comporte un écrou fixe 1c constitué par un taraudage de grand diamètre ménagé en partie supérieure, un joint d'étanchéité torique 1d, et un pion 1e de centrage destiné à servir de moyen anti rotation pour une tête de bridage choisie dans un groupe comportant des contours variés.

Une tête de bridage 30 comporte par exemple une partie inférieure constituée par une bague annulaire 31 montée autour d'un élément central portant au moins un conduit 32 ou 33 ou 34.

Cette tête de bridage 30 comporte en partie inférieure un alésage destiné à coopérer avec le pion de centrage 1e pour constituer un moyen anti rotation et pour éviter un frottement sur le joint 1d lors du vissage de la bague annulaire 41 avec le taraudage 1c du corps 1.

Au moins un des conduits 32 à 34 débouche dans un volume creux d'une pièce 35 portant un joint d'étanchéité 36 permettant de constituer une surface de bridage.

Une pièce 35 portant un joint d'étanchéité 36 peut être de toutes formes : ronde, carrée, rectangulaire, en équerre, ou toute autre forme adaptée au montage par dépression d'une pièce à travailler

Enfin, une butée 60 est prévue pour éviter tout déplacement latéral d'une pièce de travail.

La butée 60 est compatible avec le corps 1, mais n'a pas de fonction de bridage.

La butée 60 comporte une bague annulaire 61 et un moyen de montage anti rotation destiné à coopérer avec le pion 1e du corps 1, ainsi qu'une extension supérieure 62 destinée à constituer un contact latéral de butée pour une pièce P à travailler.

L'invention décrite en référence à plusieurs modes de réalisation particuliers ne leur est nullement limitée, mais couvre au contraire toute variante de réalisation dans le cadre des revendications annexées.

## Revendications

1. Dispositif de bridage d'une pièce à travailler sur une table (T) de travail du type comportant une première face de solidarisation par dépression à une table (T) de travail et une deuxième face de solidarisation par dépression d'une pièce (P) à travailler, dans lequel un corps (1) contient un moyen générateur de dépression relié à ladite première face de solidarisation par dépression à la table (T) de travail, le corps (1) présentant une cavité inférieure (2) ouverte vers le bas et disposée au voisinage de ladite première face de solidarisation par dépression à la table (T) de travail, ladite cavité (2) formant une réserve de vide, le dispositif étant **caractérisé par le fait que** ladite réserve de vide est reliée par un conduit (6, 16) sensiblement rectiligne à ladite deuxième face supérieure de solidarisation par dépression de la pièce (P) à travailler, de manière à constituer un choc de dépression lors de l'ouverture dudit conduit (6, 16) et une aspiration du côté de ladite deuxième face de solidarisation, afin que le placage de la pièce à travailler s'effectue instantanément en aspirant et en piégeant l'eau et les impuretés éventuelles dans ladite réserve de vide.

2. Dispositif selon la revendication 1, **caractérisé par le fait que** la cavité (2) formant une réserve de vide est définie par un volume creux ménagé à la base du corps (1) et par un joint d'étanchéité (3) périphérique au contact de la table (T) de travail.

3. Dispositif selon la revendication 1 ou la revendication 2, **caractérisé par le fait que** le conduit (6, 16) reliant la réserve (2) de vide à la deuxième face de solidarisation de la pièce (P) à travailler comporte un clapet (6a) de passage à commande pneumatique.

4. Dispositif selon la revendication 1 ou la revendication 2, **caractérisé par le fait que** le corps (1) présente une conformation supérieure (1b) de montage étanche d'une tête de bridage (30) par dépression de la pièce (P) à travailler.

5. Dispositif selon la revendication 4, **caractérisé par le fait que** la tête de bridage comporte un moyen de montage anti rotation à la conformation supérieure (1b) de montage étanche du corps (1).

6. Dispositif selon la revendication 4 ou la revendication 5, **caractérisé par le fait que** la tête de bridage comporte une bague à visser radialement extérieure destinée à coopérer avec un taraudage (1c) du corps (1).

7. Dispositif selon l'une quelconque des revendications 1 à 6, **caractérisé par le fait que** le corps (1) du dispositif est apte à recevoir une butée (60) comportant une bague à visser (61) destinée à coopérer avec un taraudage (1c) du corps (1).

## Patentansprüche

1. Vorrichtung zum Aufspannen eines Werkstücks auf einem Arbeitstisch (T), umfassend eine erste Oberfläche zur Befestigung durch Unterdruck auf einen Arbeitstisch (T) und eine zweite Oberfläche zur Befestigung durch Unterdruck auf ein Werkstück (P), wobei ein Körper (1) einen Unterdruckerzeuger enthält, der mit der ersten Oberfläche zur Befestigung durch Unterdruck auf den Arbeitstisch (T) verbunden ist, wobei der Körper (1) einen nach unten offenen unteren Hohlraum (2) umfasst, der an die erste Oberfläche grenzt, wobei der Hohlraum (2) eine Unterdruckreserve bildet, wobei die Vorrichtung **dadurch gekennzeichnet ist, dass** die Unterdruckreserve über eine im Wesentlichen geradlinige Leitung (6, 16) mit der zweiten, oberen Befestigungsfläche für das Werkstück (P) verbunden ist, so dass sich bei der Öffnung der Leitung (6, 16) ein Unterdruckschock und ein Ansaugen seitens der zweiten Befestigungsfläche ergibt, damit das Werkstück sofort positioniert wird, indem das Wasser und die evtl. Verunreinigungen in der Unterdruckreserve abgesaugt und eingefangen werden.

2. Vorrichtung nach Anspruch 1, **dadurch gekennzeichnet, dass** der Hohlraum (2), der eine Unterdruckreserve bildet, durch ein in der Basis des Körpers (1) angeordnetes hohles Volumen und eine fernab dem Kontakt zum Arbeitstisch (T) angeordnete Dichtung (3) definiert ist.

3. Vorrichtung nach Anspruch 1 oder 2, **dadurch gekennzeichnet, dass** die Leitung (6, 16), die die Unterdruckreserve (2) mit der zweiten Befestigungsfläche für das Werkstück (P) verbindet, ein pneumatisch gesteuertes Durchgangsventil (6a) umfasst.

4. Vorrichtung nach Anspruch 1 oder 2, **dadurch gekennzeichnet, dass** der Körper (1) eine obere, dichte Montageeinrichtung (1b) eines Unterdruck-Klemmkopfs (30) für das Werkstück (P) aufweist.

5. Vorrichtung nach Anspruch 4, **dadurch gekennzeichnet, dass** der Klemmkopf ein verdrehgeschütztes Mittel zur Montage auf die obere, dichte Montageeinrichtung (1b) des Körpers (1) umfasst.

6. Vorrichtung nach Anspruch 4 oder 5, **dadurch gekennzeichnet, dass** der Klemmkopf eine radial anzuschraubende, äußere Ringmutter umfasst, die mit einem Gewinde (1c) des Körpers (1) zusammenwirken soll.

7. Vorrichtung nach einem der Ansprüche 1 - 6, **dadurch gekennzeichnet, dass** der Körper (1) der Vorrichtung geeignet ist, einen Anschlag (60) aufzunehmen, der eine Ringmutter (61), die mit einem Gewinde (1c) des Körpers (1) zusammenwirken soll, umfasst.

## Claims

1. A device for flanging a workpiece on a worktable (T) of the type comprising a first face for securing to a worktable (T) by vacuum and a second face for securing a workpiece (P) by vacuum, wherein a body (1) contains a vacuum-generating means connected to said first face for securing to the worktable (T) by vacuum, the body (1) having a lower cavity (2) that is downwardly open and positioned near said first face for securing to the worktable (T) by vacuum, said cavity (2) forming a vacuum tank, the device being **characterized in that** said vacuum tank is connected by a substantially rectilinear conduit (6, 16) to said second upper face for securing the workpiece (P) by vacuum, so as to form a pull-in shock when said conduit (6, 16) is opened and suction on the side of said second securing face, in order for the pressing of the workpiece to be done instantaneously by suctioning and by trapping water and any impurities in said vacuum tank.

2. The device according to claim 1, **characterized in that** the cavity (2) forming a vacuum tank is defined by a hollow space arranged at the base of the body (1) and by a peripheral sealing gasket (3) in contact with the worktable (T).

3. The device according to claim 1 or claim 2, **characterized in that** the conduit (6, 16) connecting the vacuum tank (2) to the second face securing the workpiece (P) includes a pneumatically controlled passage gate (6a).

4. The device according to claim 1 or claim 2, **characterized in that** the body (1) has an upper configuration (1b) for the sealed assembly of a flanging head (30) by vacuum of the workpiece (P).

5. The device according to claim 4, **characterized in that** the flanging head includes a means for anti-rotation assembly in the upper configuration (1b) for sealed assembly of the body (1).

6. The device according to claim 4 or claim 5, **characterized in that** the flanging head includes a radially outer screwing ring intended to cooperate with a tapping (1c) of the body (1).

7. The device according to any one of claims 1 to 6, **characterized in that** the body (1) of the device is able to receive a stop (60) including a screwing ring (61) intended to cooperate with a tapping (1c) of the body (1).
